(19) Europäisches Patentamt
European Patent Office
Office européen des brevets

(11) **EP 4 718 193 A1**

(12) **EUROPEAN PATENT APPLICATION**

(43) Date of publication:
**01.04.2026 Bulletin 2026/14**

(21) Application number: **24202731.6**

(22) Date of filing: **26.09.2024**

(51) International Patent Classification (IPC):
**G05B 23/02** (2006.01)  **G06N 3/08** (2023.01)
**G06N 20/00** (2019.01)  **G07C 5/08** (2006.01)

(52) Cooperative Patent Classification (CPC):
**G05B 23/0254; G05B 23/024; G05B 23/0283;
G06N 3/08; G06N 20/00; G07C 5/0808**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventors:
• **Paulitsch, Christoph**
  **76199 Karlsruhe (DE)**
• **Köbler, Alexander**
  **90461 Nürnberg (DE)**
• **Klos, Hans-Henning**
  **91249 Weigendorf (DE)**
• **Pol, Sebastian**
  **90556 Seukendorf (DE)**

(74) Representative: **Siemens Patent Attorneys
Postfach 22 16 34
80506 München (DE)**

(54) **AUTOMATED MONITORING OF A DRIVE SYSTEM**

(57) A, preferably computer-implemented, method of monitoring a component (1, 2, 3, 5) of a drive system (4), preferably by an informed anomaly detection model, comprising the steps of: inputting one or more input values of variables representing an operation of at least one component and/or component data (D1) of the drive system (4) into an anomaly detection model (A1, A2, A3), preferably obtained from a sensor signal of one or more sensors attached to the drive system and/or component data, varying one or more model parameters of the anomaly detection model (A1, A2, A3), preferably one or more model parameter values representing one or more operating states and/or one or more load states of the drive system (4), determining a robustness indicator (RO), indicating a robustness of the anomaly detection model for detecting and/or predicting an anomaly in the operation of the drive system (4) when the model parameters are varied.

## Fig. 1

## Description

## Technical Field

The present disclosure relates to a, preferably computer-implemented, method of monitoring, e.g., determining and/or predicting, conditions of machines, in particular one or more components of a drive system, e.g., for driving a motor, such as a geared motor, as well as a corresponding data processing system, computer program and computer-readable medium.

## Background Art

Machines, in particular, drive systems and motor control units like frequency converters, electric motors and electric geared motors are usually designed on the basis of the required power, torque and load cycles. Thereby, static values are used which are assumed as a constant load on the machine. In reality, however, there are deviations in the actual power, torque and load cycles during operation. This has a considerable effect on the condition of the machine or rather its components during operation and their remaining service life.

Critical components of a drive system are, for example, the bearings, oil, (mechanical) holding brakes and shaft sealing rings and other wear parts. Due to the prescribed maintenance intervals, an operator is required to carry out regular checks and replace worn parts, in particular, worn critical components. This requires a high expenditure of time and capacity, which contradicts the goal of high equipment availability and cost-effectiveness.

Further, due to the static design of machines it is highly probable that maintenance will not take place at the optimum time. This means that maintenance either takes place too early, because the actual (wear due to) load on the geared motor was lower than assumed at the design stage, resulting in unnecessary consumption of resources, or too late, because the actual (wear due to) load was higher which can lead to a failure of the machine decreasing system availability. Since it is often not possible for the operator to determine the optimum time for maintenance, a failure of the machine is accepted as a cheap option and attempts are made to restore plant availability by keeping massive resources available (personnel in shift work, material).

It is known to use condition monitoring systems, CMS, to minimize the risk of a failure or to increase the availability of machines with optimal maintenance intervals. CMS record the actual load conditions using external sensors on the machines or drives.

From European patent publication EP 4162600 it has become known to continuously derive a current load of the machine based on the provided technical specification and the received data set via a knowledge base. A current condition of the machine is continuously predicted by integrating over the derived current load and all previously derived current loads.

Furthermore, from European patent application EP 24193237 a method of providing a virtual measurement value of an electro-mechanical device, such as a motor, has become known, wherein a virtual measurement value is determined by a simulation of the electro-mechanical device based on a parameter set of the frequency converter.

Still further, from European patent application EP 24171297 a condition monitoring of an electro-mechanical system and/or a process controlled by the electro-mechanical system has become known.

From European patent application EP 22192834 a method of monitoring and/or controlling of an electro-mechanical device, such as an electrical motor and/or generator has become known, wherein a probability distribution of a virtual measurement variable and a corresponding confidence level for a first value of the virtual measurement variable is determined.

From European patent application EP 23173091 an anomaly Detection for a Cutting Machine with an Electrically Driven Spindle has become known.

From European patent application EP 21210218 a computer-implemented method for monitoring or controlling machine, e.g., robot, involves adapting concurrent simulator using simulator variant assigned to selected deviation type, and monitoring or controlling machine by adapted parallel simulator.

## Summary of Invention

In any case, in industrial plants maintenance staff needs to know, preferably in advance, when maintenance is to be carried out in order to prevent machine failure and efficiently plan their activities. When signals from drives and/or from respective components are interpreted correctly, they give hints about incipient machine failure. However, since in many cases an expert to interpret the signals is not available an automatic failure monitoring algorithm needs to be found. Rack feeders are installed in high rack warehouses that are operated continuously 24h/7d. Recently the delivery crises led to an increase in workload at warehouses and in particular for stacker cranes, because goods are ordered at higher volume and in smaller packages to reduce delivery risks by stockpiling and by diversification of sources and delivery tours so that a high availability and low downtime becomes even more important. In order to avoid downtimes due to failures a revision of stacker cranes is carried out on a yearly basis by experts. Despite a thorough inspection lasting roughly 3 days there are several faults such as controller mistuning, occupied warehouse box, guiderail misalignment, and/or belt looseness that occur during operation and if not detected in advance lead to unplanned downtime. If these faults were detected in advance mitigation measures could be planned to be taken during the time of regular standstill, e.g., during shift change and/or work break interruptions, to prevent unnecessary downtime.

It is thus necessary to automatically monitor and/or control a drive system and/or component thereof, e.g., such as a stacker crane or component thereof, preferably before a failure occurs. Consequently, it is an object of the present invention to increase the associated service life of machines and/or to predict the optimal time point for maintenance and/or servicing in a cost-effective way by providing a computer-implemented method of predicting conditions of machines as well as a corresponding data processing system, computer program and computer-readable medium.

The object is achieved by the aspect of the independent claims. For example, a, preferably computer-implemented and/or automated, method for monitoring a drive system is proposed.

Independent of the grammatical term usage, individuals with male, female or other gender identities are included within the term.

**Brief Description of the Drawing**

Fig. 1     shows a schematic illustration of an exemplary drive system.

Fig. 2     shows exemplary method steps of operation condition detection, anomaly model selection and re-training.

Fig. 3     shows exemplary component data such as machine description.

Fig. 4a     shows an exemplary (gradient based) training of an anomaly detection model.

Fig. 4b     shows another exemplary (directed gradient based) training of an anomaly detection model.

Fig. 5a     shows a detection of an operating state based on a speed signal.

Fig. 5b     shows a detection of an operating state based on a torque signal.

Fig. 5c     shows a detection of an operating state based on a position signal.

Fig. 6.1a     shows exemplary steps for identifying/detecting operating state based on a signal slope.

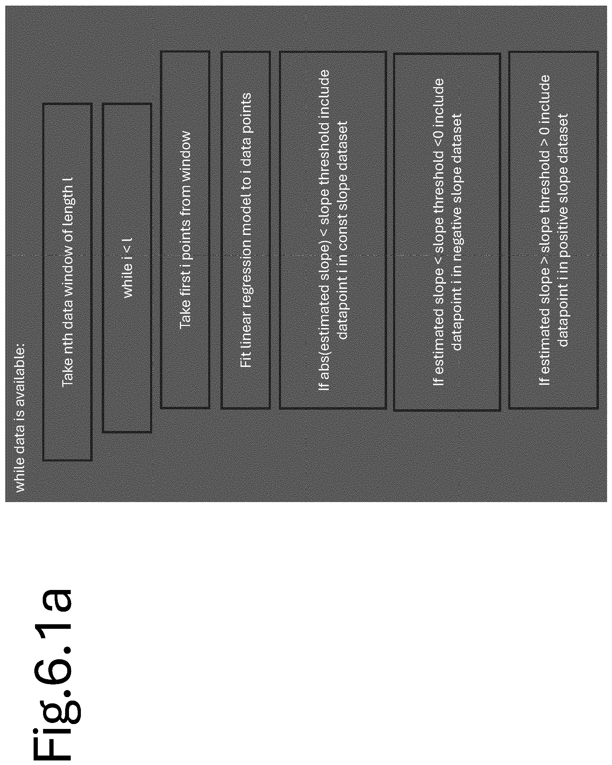

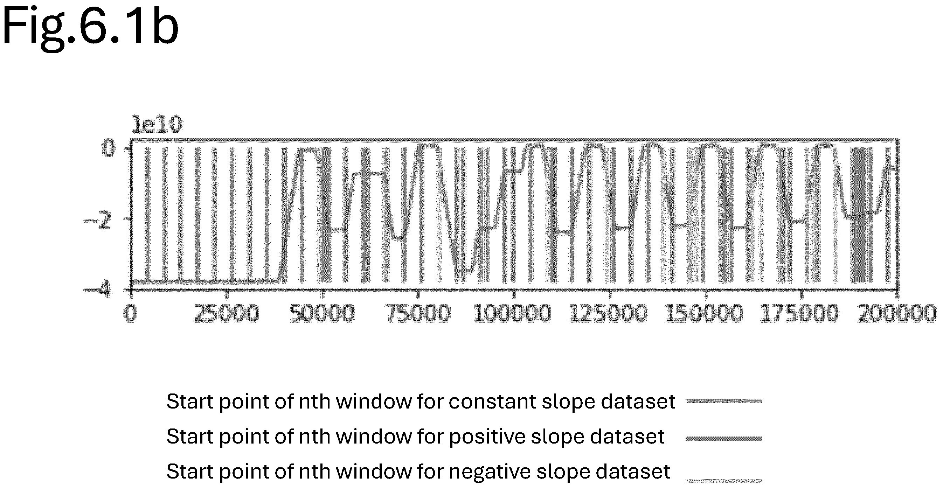

Fig. 6.1b     shows an illustration of the slope parts, i.e. for positive, negative, and constant slope parts.

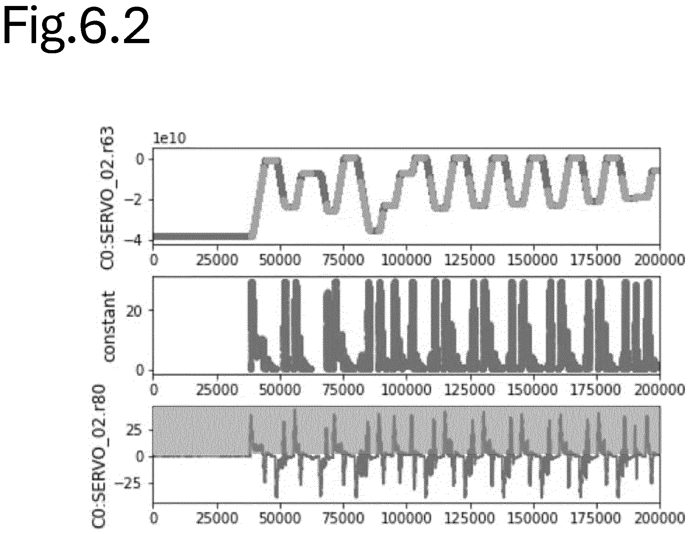

Fig. 6.2     shows another exemplary embodiment for identifying/detecting operating state based on a torque signal.

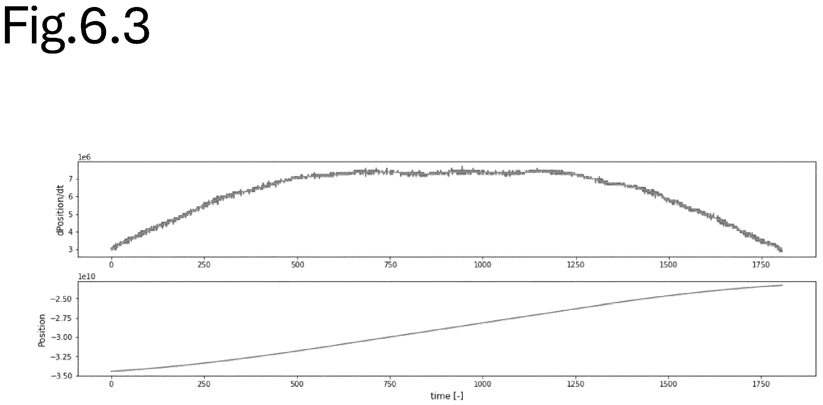

Fig. 6.3     shows another exemplary embodiment for identifying/detecting operating state based on a position signal.

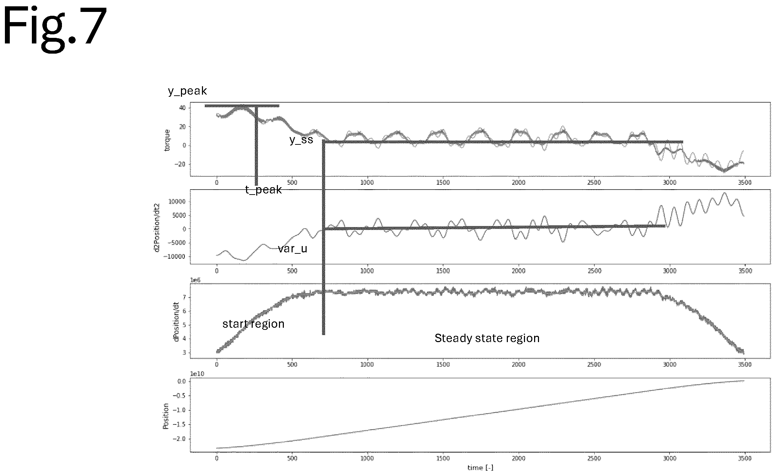

Fig. 7     shows an exemplary embodiment for load detection and model identification, here based on a torque and position signals.

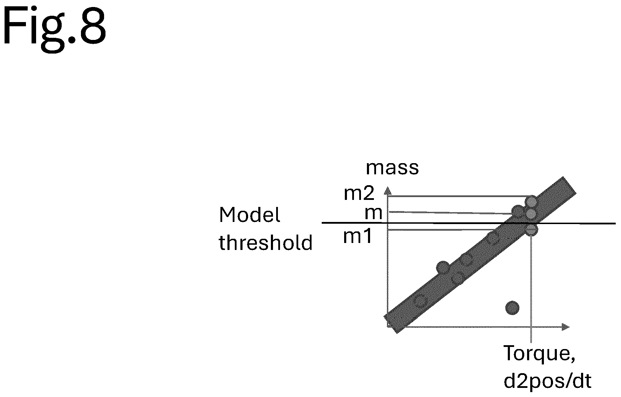

Fig. 8     shows an exemplary embodiment of determining a robustness indicator for a anomaly detection model, here based on a mass dependent uncertainty.

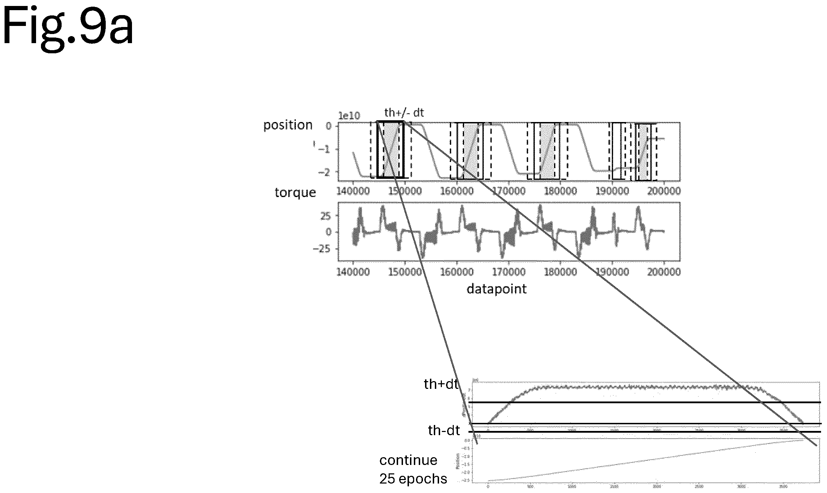

Fig. 9a     shows an illustration depicting the identification of an operating state in the position signal at different threshold values.

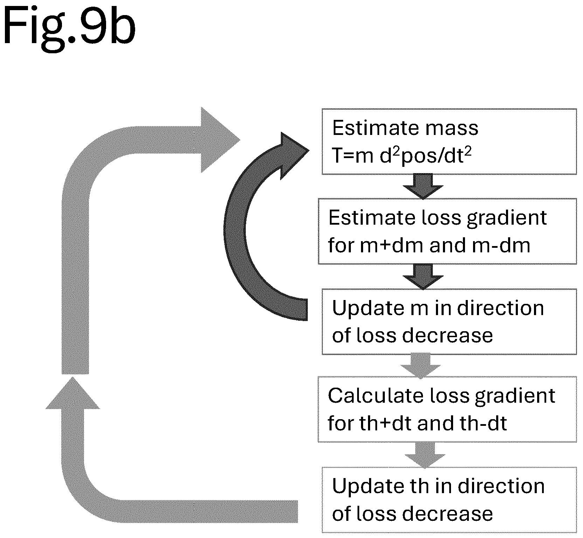

Fig. 9b     shows exemplary steps for (re-)training an anomaly detection model.

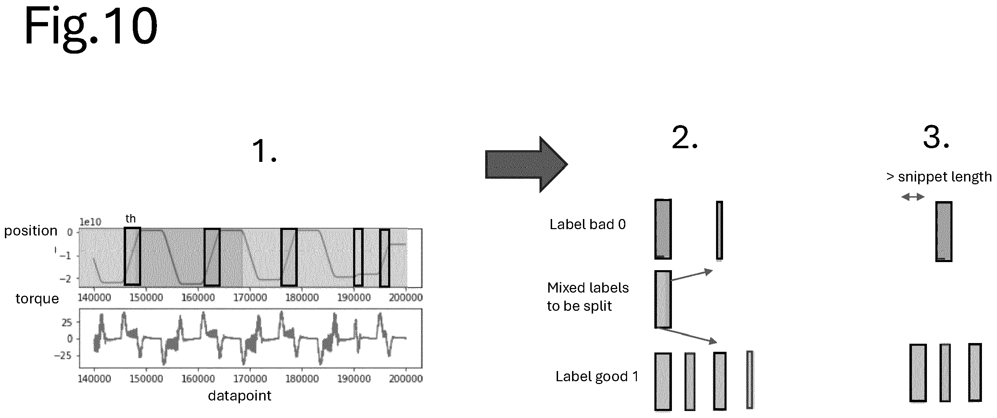

Fig. 10     shows the identification of sections of operating states, wherein the sections represent different load states.

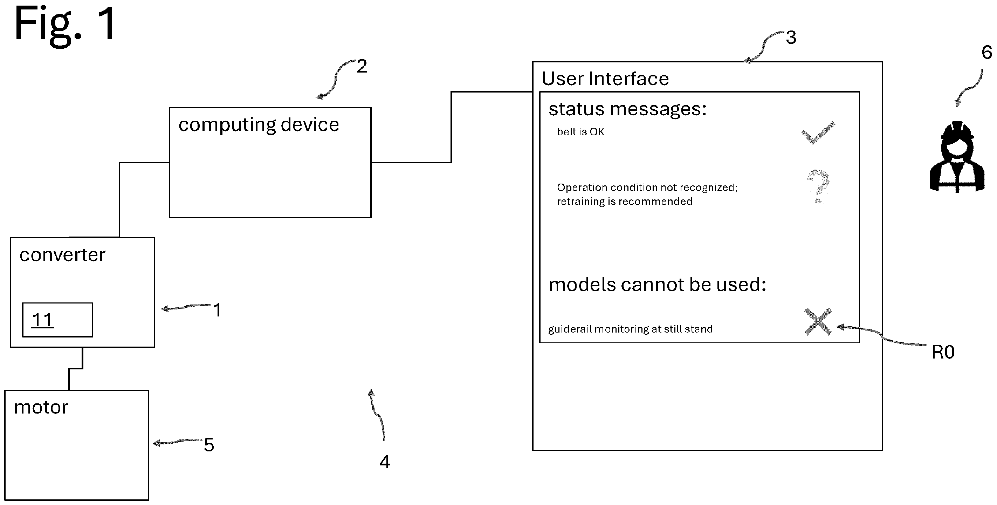

Fig. 1 shows a schematic illustration of an exemplary drive system, in particular operative to monitor the operation of the drive system. In Figure 1 an electric power converter 1, also denoted as converter in the following, of an electro-mechanical system 4, also denoted as drive system, is shown. The control of the drive system 4 may be performed by the converter 1 and a control unit 11 preferably integrated into the converter 1. To that end, the converter 1 and/or the control unit 11 may be part of a control loop and may comprise a processor and a memory to control the drive system 4. The converter 1 hence powers an electrical motor 5 of the drive system 4. The drive system 4 may thus comprise the converter 1, which for example is coupled to a, e.g., multiphase, line voltage. The drive system 4 may thus further comprise the motor 5. A gearbox, not shown, may be coupled to the motor 5. The motor 5 may be coupled to a load, also not shown, e.g., for performing one or more process steps for controlling and/or affecting a process, e.g., in the production of a product and/or processing of a material. The control unit 11 of the converter 1 may control one or more insulated-gate bipolar transistors, IGBT, of a power block of the converter, which serve as electronic switches for providing electric energy to the motor 5. Alternatively, the motor 5 may be directly coupled to the load and/or line voltage, i.e. without a gearbox and/or without a converter.

Thus, a drive monitoring system (for monitoring the drive system) is proposed. The drive monitoring system may comprise the computing device 2, e.g., edge device, and/or the user interface 3. Hence, a drive system may comprise the drive monitoring system. It should be understood, that the drive monitoring system can be integrated in the drive system, e.g., as part of the converter.

The converter 1 and/or control unit 11 may be connected to an apparatus 2, e.g. an edge device or another computing device, such as an (industrial) computer. To that end, the control unit 11 of the converter 1 may be connected to a data bus via which operating data, such as actual values and/or setpoint values of the converter are transmitted. Hence, these actual values and/or setpoint values may be transmitted by the converter to the computing device 2. In addition or alternatively, component data specifying the one or more components of the drive system may be transmitted, e.g., from the converter, to the computing device 2. This data, i.e. the actual values, the setpoint values, and/or the component data, may be retrieved by the computing device from the converter or otherwise obtained by the computing device, e.g., from a memory.

The computing device, also denoted as apparatus, 2 may comprise one or more software applications, i.e. one or more computer programs, e.g., for processing the actual values, the setpoint values, and/or the component data as input data, and/or for outputting a result indicating an abnormal behavior, i.e. an anomaly and/or a nominal behavior of the drive system or of any one of its components. Thus, the input data may serve for condition monitoring and/or anomaly detection, as the case may be. The one or more software applications may comprise one or more machine learning models ML and/or simulation models for processing the input data obtained, e.g., from the converter 1 and/or control unit 11. Hence, the control unit 11 may provide input data to the one or more software applications of the apparatus 2.

As the case may be, the apparatus 2 may serve for providing connectivity of the converter 1 with a higher-level system such as a cloud computing system, not shown, and/or the apparatus 2 may serve as an on-site computing unit for processing the operating data provided by the converter 1. It should be understood that a data bus 22 may be part of the apparatus 2 and may be coupled to the converter 1 via respective interfaces of the converter 1 and apparatus 2. The software applications may be executed on an operating system, OS, e.g. Linux, of the apparatus 2. Furthermore, the one or more software applications may be located in a cloud computing system. The operating data may also be transferred to the cloud computing system for processing by the one or more software applications, e.g. for providing a virtual measurement value, for condition monitoring and/or anomaly detection, as the case may be.

Additionally, or alternatively, e.g., in case the motor 5 is directly coupled to the line voltage, the apparatus 2 may be coupled to the motor and/or one or more sensors attached to the motor 5 or located in the vicinity of the motor 5. The one or more sensors may provide the operating data, e.g. comprising the first parameter set, to the apparatus and/or the software applications. That is, the one or more sensors, may provide actual values and/or setpoint values relating to the operation of the electro-mechanical system and/or the controlled process to the apparatus 2. It should be understood that the actual data may be obtained by one or more sensors, e.g. a sensor sampling a signal that is digitized and stored as a (digital) actual value. The actual values may be stored in a memory, e.g. of the converter 1 and/or apparatus 2, from where they may be retrieved by, or otherwise transmitted to, a software application, e.g., for providing a virtual measurement value, for condition monitoring and/or anomaly detection, as the case may be, and/or one or more further modules for performing the steps described herein, such as labeling, matching, and/or displaying.

Now, for example a stacker crane, is, e.g., used for transport tasks and may automatically store and retrieve, as well as pick, packaged goods. In connection with a warehouse management system, a stacker crane meets the increased requirement of modern and fast flow of goods. Via a warehouse management software interface, corresponding transport orders may be sent to the stacker crane and requested goods are provided. Vibration and/or belt tension sensors for directly monitoring the health states of the components may be added to the stacker crane. However, they are relatively expensive, and it is unknown how many faults each sensor can predict reliably in advance for all operating states of a stacker crane. Solutions based on available automation signals acquired for drive system, such as used for stacker crane control, use general anomaly detectors that are based on a single model that may not specify the type of anomaly detected. Further investigations by maintenance staff or domain experts need to be carried out at the time of standstill. For example, the Euclidian distance of one or more input values, as described herein, may be compared to a fingerprint representing a normal operating condition. As a result, a general anomaly indicator may be obtained based on the comparison. However, this distance is also often difficult to interpret. From other technical domains informed machine learning is known that uses domain knowledge representations such as algebraic equations, logic rules, or simulation results, e.g. during the training of the machine learning models. For each application the available domain knowledge and its use for machine learning models needs to be defined by a data scientist. In the mixture of experts approach multiple expert machine learning models are used for different regions of the problem space. During inference a specific input is assigned to the corresponding expert model by a dedicated and simultaneously trained gating model. The number of experts and their attributes is defined application specific by a data scientist. Alternatively, a high degree of domain specific knowledge is used to split the available data into distinctive problem spaces e.g. based on operation condition or other environmental factors. Very specific expert models are trained on these narrow sub-problems derived from fixed expert rules. Optimization of models, such as anomaly detection models, for a given problem space may be done by finding best parameter sets and minimizing a loss function. However, when optimizing all parameters and (gating- and/or sub-)models at once, calculation time might become prohibitively large.

Thus, a solution for monitoring the operation of a drive system such as in a stacker crane or other application is proposed herein. To that end an anomaly detection model may serve for determining and/or predicting an anomaly in the operation. One or more converter parameters may be used as input of an anomaly detection model. The anomaly detection model may be executed, deployed and/or running on an electronic processing unit, such as said computing device or in the converter 1, or the control unit 11 of the converter 1. For the detection and/or prediction of an anomaly an operation state, also referred to as operating condition may be determined. Furthermore, a load (attached to the motor) may be determined or estimated.

For obtaining the input values a communication unit, such as said computing device, may be used for collecting component data such as one or more machine descriptions, e.g. from commissioning devices. The communication unit, such as said computing device, may also serve for collecting other component data such as information about operations conditions and programs from the controller converter or drive system. Furthermore, the component data may comprise output alarms. In addition, user interface 3 as shown in Figure 1 may be used for displaying information, such as a result of the anomaly detection and other indicators, such as an indicator representing a robustness of the result of the anomaly detection model or other information to a user 6 and/or for obtaining user feedback about operations and output fault related messages to be acknowledged by the user 6, also denoted as operator, as in the case of a stacker crane "belt tension is too small", "controller is mistuned", "box is occupied", or "guiderail is misaligned".

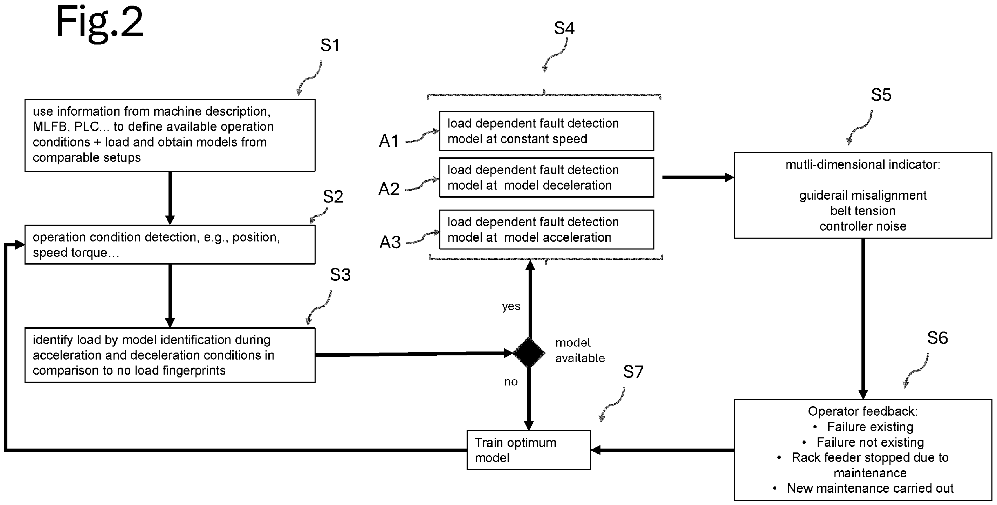

Fig. 2 shows exemplary method steps of operation state detection, anomaly model selection and retraining. As shown, it is proposed to combine, e.g. in a step S2, input values (representing an operation of at least one component of the drive system) such as position, torque, speed, and component data such as machine information, e.g., logs and/or manuals to determine (existing) operation states of the drive system, e.g. said stacker crane, for example obtained in a step S1. The operation state may be characterized by one or more accelerations, one or more decelerations, and/or one or more constant travel times. Furthermore, it is proposed to determine, identify, or estimate a load in different operation states such as during said one or more acceleration, deceleration and/or constant travel phases, e.g. in a step S3. It is further proposed to determine, identify, and/or use one or more anomaly detection models, e.g. in a step S4, which are optimized for or which may be optimized for operating states and/or estimated load, e.g. in order to detect a certain fault type and/or a fault severity, e.g. in a step S5.

It may thus be determined whether one or more anomaly detection models A1, A2, A3, e.g. for a load or load state and/or for one or more operating conditions such as constant speed, acceleration, and/or deceleration, as the case may be, are available.

In addition, user feedback may be obtained, e.g. via the user interface, in a step S6 including information about fault related results from yearly maintenance, operation state changes, carried out maintenance, and/or production interruptions in order to iteratively adjust the anomaly detection models according to the operating state and/or the different estimated loads. In a step S7 one or more of the anomaly detection modes or a new anomaly detection model (if none or no suitable model is available) may be (re-)trained.

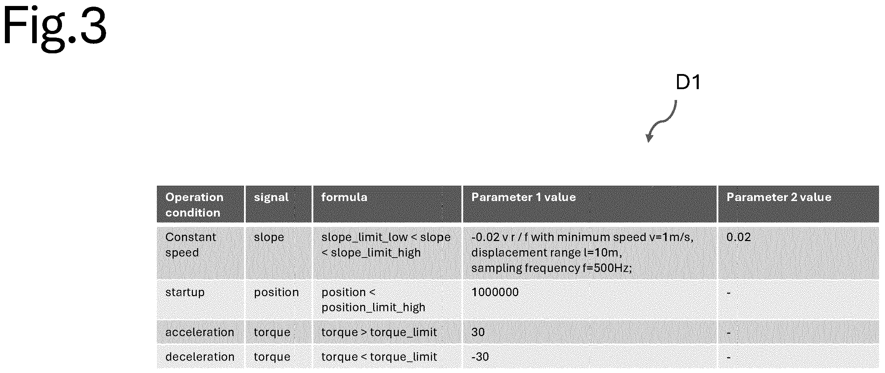

Fig. 3 shows exemplary component data D1 such as a machine description or derived from a machine description. Such a machine description may comprise machine information and/or may be continuously collected during initialization, inspection, repair, update of other stacker crane monitoring systems, and/or rule update. The component data D1 may thus comprise one or more machine parameters, such as parameter variable length, ordering number, operating state(s), axis type(s). For example, parameter length may be indicated by corresponding value such as 1.2; 3; 10. Furthermore, exemplary operating states may be or comprise stop; travel left; travel right; travel up; travel down, and/or axis type may take on values indicating horizontal, and/or vertical orientation. For example, the operating state may comprise constant speed, startup, acceleration, deceleration. Further exemplary operating states, also referred to as operation condition, and related properties/parameters are shown in Figure 3.

Again, and as shown in Figure 2, for initialization training may be carried out, e.g. in a step S7, on input values such as speed, torque and/or position signals, preferably at various operation conditions and/or loads, e.g., as obtained in a step S2. For example, an operating state may be performed or executed with one or more loads, i.e. loads of different values. In case an operating state, such as, e.g., "inspection of failure X finished", is detected, e.g. in a machine log, one or more models for detection of a failure-less condition are trained. In the example of "inspection of failure X finished" X stands for the name of the inspected failure, e.g., known from machine logs, or may be unspecific. A model for a specific fault, also referred to as failure, such as guide misalignment, belt tension, and/or controller noise may be trained, e.g., during repair phases when the operating state "repair of failure X" is detected, e.g., in machine logs. Additionally, based on the specific fault models an overall health level model per drive system and/or component may be trained. Model templates for the different faults and/or machines may be stored in a database and/or collected from and/or distributed to other installations of the drive system. The metadata description of a model template may contain a machine description, for example in case of a stacker crane the stacker crane's length, product type description of the automation equipment (e.g. ordering number), available operation conditions and/or axis type. This machine description may be obtained from the drive system's manual. The available metadata dimensions and/or values may be displayed on a user interface. In addition to the predefined operation condition rules, also referred to as properties or characteristics, as described herein, optionally a mathematical description of operation conditions based on the available torque and/or speed signals, e.g., for each axis, can be provided for example by a machine expert. A rule input tool allows the user to optionally formulate additional boundary conditions on available signals to define operation conditions. Each template includes a predefined mathematical description of operation conditions that the machine expert can optionally take as a starting point, or the template is chosen right away if no further expert input is provided. Once the training of a new model is triggered from initialization, inspection, repair or user input or a new model is provided by another installation of the drive system, matching information is queried from the database of historical models and related parameters relevant dimensions and historical selections may be shown to the user via the user interface, optionally allowing a step by step configuration. A model selection workflow may allow the user to select the respective model. If a model is available for the described machine type, fault type, parameter and/or operation condition the model is queried from the database, retrained on available data from the specific drive system and/or run by the electronic processing unit, e.g. on said computing device or in a converter. If there are several models available, the one with the best performance metric from previous installations may be chosen.

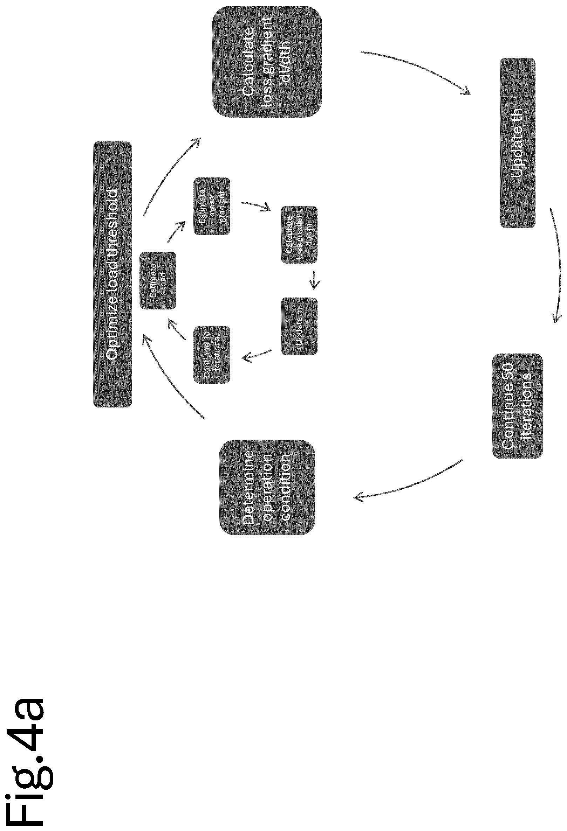

Fig. 4a shows an exemplary training of an anomaly detection model. The training of an anomaly detection model may comprise an optimization with respect to operating state and/or load (of the drive system or any one or more of its components). An optimization workflow shown in Figure 4a may be started in order to adapt model parameters to the available process data x that is labeled with labels y as good (without failure) or bad (with failure) corresponding to the selected failure to be monitored, detected, and/or predicted. This results in the data set $(x, y) \sim D$. The labels y may be known, e.g., by user input or implicitly from inspection and/or repair results, e.g., in one or more machine logs.

At first, the given set of characteristics or rules, e.g., for determining an operating state, may be obtained, e.g., from user input, or from historical database entries. Said characteristics or rules may comprise on or more thresholds. Thus, thresholds may be determined iteratively for each characteristic or rule starting with an estimate, for example for a load. To that end, a best estimation method or expert rule out of several competing ones may be selected. For other rules characterizing an operating state, fixed rules may be set by an expert. For example, and as shown in Figure 4a, in an outer iteration, one or more characteristics of an operating states with given thresholds are applied to the data. The data may comprise speed, position, and/or torque signals, e.g., as a subset $D\_k \subset D$. Now, in an inner iteration the data set $D\_k$ may be further split into multiple subsets using one or more further thresholds, e.g. for one or a single load estimate rule this might result in the subsets $D\_{jl}, D\_{jh} \subset D\_k$ for high and low loads, respectively, where for example $D\_{jl} \cap D\_{jh} \neq \varnothing$, $D\_{jl} \cup D\_{jh} = D\_k$. In comparison to optimizing all thresholds at once, e.g., by a single decision tree algorithm calculation effort during training is reduced, expert input is introduced explicitly, uncertainty about the rule to choose from a set of rules is considered, explainability of threshold values is improved and parallelization of training on reduced datasets becomes possible.

Hence, at first, an operating state may be determined and for that operating state a load (estimate) is determined. Thereby, the performance of the anomaly detection model may be improved since now, the operating state can be analyzed with respect to the different load states of the drive system. Thereby the accuracy and/or robustness of the anomaly detection model may be improved.

In addition, as described herein, the variation of the one or more model parameters, such as the load estimate, may serve determining the robustness of the model for detecting and/or predicting an anomaly in the operation of the drive system. That is, if the result of the model changes upon a variation of the one or more model parameters this may indicate that the model is insufficiently adapted to the operation of the drive system and/or that the model needs to be retrained. Such variation of the model parameter may also lead to an adaptation of the model parameters, either automatically or by user input. The robustness indicator may thus indicate whether the model is usable or applicable to the current operation of the drive system. In addition, based on the robustness indicator further anomaly detection models may be used for the respective operating state, wherein the models are used for different characteristics of the operating state. For example, the different models may be adapted to be used for two different load states, such as high load and low load, of the drive system. Thereby, the accuracy and/or robustness of the anomaly detection model is increased.

Returning to the inner iteration, for each of the threshold $\theta_j$, e.g. low or high load, a model is trained with the respective dataset $D_{jl}$ or $D_{jh}$ considering good and bad data and the loss is calculated for both models. The combined loss $l_c(\theta_j) = (n_l l_l(\theta_j) + n_h l_h(\theta_j))/(n_l + n_h)$ may be calculated by summing up the weighted average of the losses of all uncertain models e.g. for low $l_l(\theta_j)$ and high load $l_h(\theta_j)$ models. The number of available datasets $n_i = |D_{ji}|$ for each model $i = l, h$ is taken as the individual weight. In order to decide in which direction to change the threshold for the next iteration $j = j+1$, the loss gradients in each direction $\delta l_c / \delta \theta_j^+ = (l_c(\theta_j + \Delta\theta) - l_c(\theta_j)) / \Delta\theta$ and $\delta l_c / \delta \theta_j^- = (l_c(\theta_j - \Delta\theta) - l_c(\theta_j)) / \Delta\theta$ are calculated numerically by training the models for incrementally increased $\theta_j + \Delta\theta$ and decreased $\theta_j - \Delta\theta$ values of the threshold. For the next iteration of the uncertain threshold the threshold is

- increased to $\theta_{j+1} = \theta_j - \alpha \, \delta l_c / \delta \theta_j^+$ if the model with the incrementally increased threshold value has a smaller loss $\delta l_c / \delta \theta_j^+ < 0$ or
- decreased to $\theta_{j+1} = \theta_j + \alpha \, \delta l_c / \delta \theta_j^-$ if the model with the incrementally decreased threshold value has a smaller loss $\delta l_c/\delta\theta_j^- < 0$.

In every iteration the respective data sets are adapted according to the updated thresholds resulting in an exchange of datapoints in proximity to the threshold between the sets. The iteration loop for optimization of the uncertain rules is stopped when a set number of iterations is reached, the loss does not change more than a specified amount for a predefined number of consecutive iterations or all possible combinations of the $N_k$ given datasets have been calculated. During iterating over the uncertain thresholds the boundary conditions of the rules are also considered, e.g. the estimated load values $m_k$ can bound reasonable threshold values $m_{kmin} < \theta < m_{kmax}$ by a maximum $m_{kmax}$ and minimum $m_{kmin}$ estimated load for the given dataset.

Now, turning to the outer loop, an optimization of on a characteristic or rule, e.g., of an operating state can be performed. After the optimization of the mass threshold $\theta$ in the inner loop has been terminated and a minimum loss has been determined for the given dataset, the optimization continuous in the outer loop by modifying the available data set by adapting the certain operation condition threshold $\tau$. A model loss $l_o$ is determined for the data $D_k$ corresponding to the operation condition threshold $\tau_k$ at the kth iteration. In order to determine in which direction to change the threshold in the next iteration $\tau_{k+1}$, models are trained and losses are determined for an incremental decrease $-\Delta\tau$ and increase $\Delta\tau$ of the certain threshold.

- If the loss decreases with decreasing threshold $\delta l_o/\delta\tau_k^- < 0$ the threshold $\tau_{k+1} = \tau_k + \alpha \ \delta l_o/\delta\tau_k^-$ is decreased for the next iteration.
- If the loss decreases with increasing threshold $\delta l_o/\delta\tau_k^+ < 0$ the threshold $\tau_{k+1} = \tau_k - \alpha \ \delta l_o/\delta\tau_k^+$ is increased for the next iteration.

The adaption of the certain threshold $\tau_k$ in every step $k$ yields a different data subset $D_k$ such that the optimization of the uncertain threshold $\theta$ is carried out again in the inner iteration as explained above. The certain rule threshold optimization iteration continues until a fixed number of iterations has been reached, the calculated loss does not change more than a given value or threshold values for all possible data subsets have been used. After setting the threshold a plausibility check is carried out in order to check that enough data is available for training and testing of the model. It is noted that herein the symbol $\tau$ (tau) is used interchangeably or instead of th.

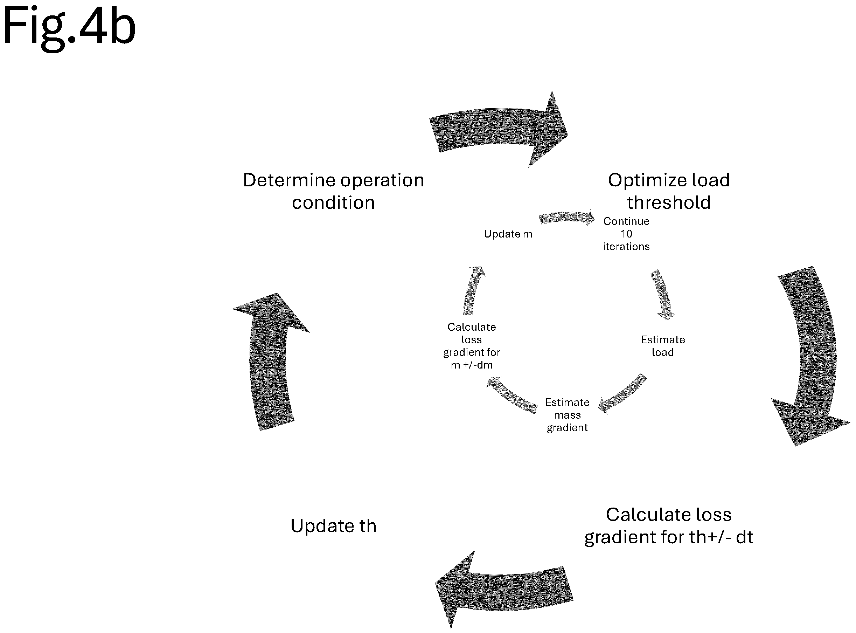

Figure 4b shows a more detailed embodiment or alternative to the embodiment of Figure 4a. It contains further details about the update of the threshold th. Fig. 4b shows another exemplary training of an anomaly detection model. Therein, as before, upon determining one or more operating conditions a load threshold optimization is performed. The load threshold may serve for distinguishing one or more load states, e.g. high or low load or additional load states. Here, in the inner loop, a threshold optimization may be performed in order to improve the differentiation between the different load states. Subsequently the steps in the outer loop may be continued, e.g. by calculating a loss gradient of the threshold, e.g., when varying the threshold, i.e. th+/-dt.

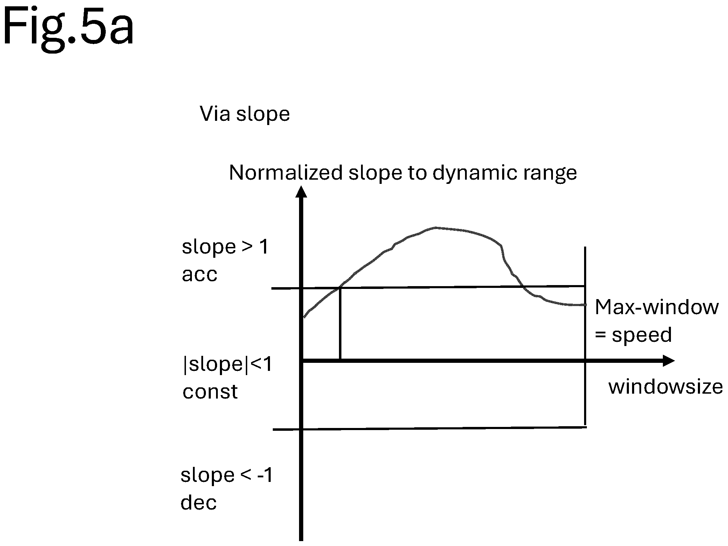

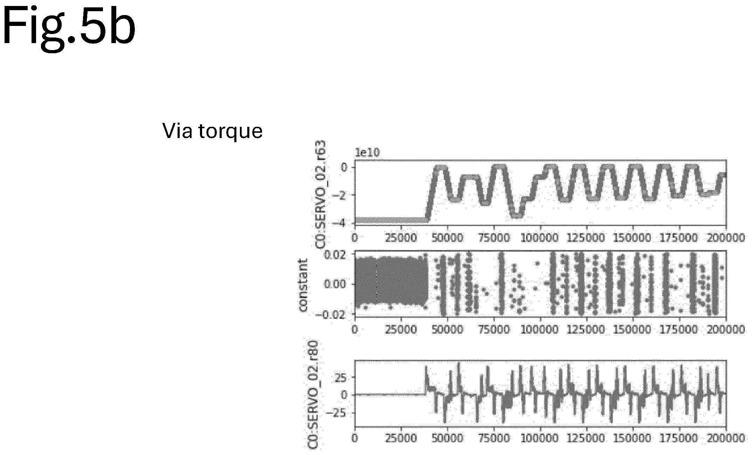

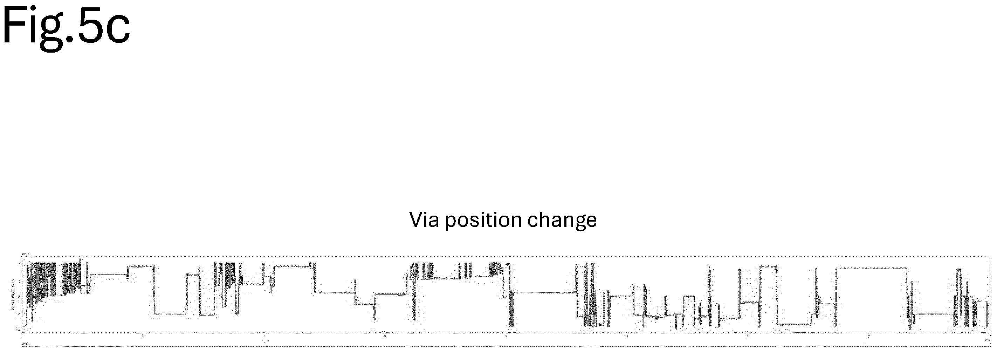

Now turning to Figures Fig. 5a, 5b, and 5c a detection of an operating state based on a speed signal, a torque signal, and a position signal, respectively is shown. Thus, based on said one or more signals the operating state and its characteristics or rules of a drive system, such as a stacker crane, may be determined. In the stacker crane case operation condition rules may be based on a slope estimate, a torque signal, and/or position signal as shown in Figures 5a, b, c respectively.

In Figure 5b the blue line or dots denote the sampled data values representing "CO:SERVO_02.r63", i.e. the speed. Therein, the orange colored segments denote constant a constant speed as shown, as shown in the middle. On the x-axis represents the sampled and numbered data samples and the y-axis the corresponding speed values"CO:SERVO_02.r63" and the corresponding actual torque values "CO:SERVO_02.r80".

Similarly in Figure 5c shows torque values, e.g., given by the actual torque generating current values, "CO:SERVO_02.r745". Therein orange denotes the constant torque values, green denotes deceleration and red acceleration phases.

The operation condition rule based on the slope of the position signal is illustrated in Figures 6.1a, b. The position signal is cut into chunks and each window is cut into subwindows of varying length. Each subwindow starts at the beginning of the chunk and ends at an endpoint within the chunk. Every point in the chunk serves as an endpoint of another subwindow so that there are as many subwindows as data points in the chunk. For each subwindow a regression model between time and the position value is estimated. The slope of each regression model is taken as a slope estimate for the signal in each sub window so that each point of the subwindow is related to a slope value. If the absolute value of the estimated slope is below a predefined slope threshold a constant speed operation condition or else a forward or backward movement operation condition is assumed. Fig. 6.1a shows exemplary steps for identifying/detecting operating state based on a signal slope. Fig. 6.1b shows an illustration of the slope parts, i.e. for positive, negative, and constant slope parts.

The acceleration, deceleration and constant operation conditions based on the torque signal are detected as shown in Figure 6.2 by setting appropriate thresholds on the torque signal. Fig. 6.2 thus shows another exemplary embodiment for identifying/detecting operating state based on a torque signal.

Now turning to Figure 6.2, the "CO:SERVO_02.r63", i.e. the speed, data samples are shown, therein samples taken when the torque values "CO:SERVO_02.r80" exceeded a threshold, e.g., positive torque, are shown in orange. That is, the speed values at constant torque are determined.

In Figure 6.3 an operation point detection based on position is shown where thresholds on the derivative of position determine whether movement in negative, positive direction or constant operation are present. Fig. 6.3 thus shows another exemplary embodiment for identifying/detecting operating state based on a position signal. In Figure 6.3 the data samples relating to the derivative of the position dposition/dt are shown as a rippled curve, whereas a filtered or fitted curve is shown in orange (overlaying the rippled curve). In the lower diagram of Figure 6.3 the corresponding position is illustrated.

Fig. 7 shows an exemplary embodiment for load detection and model identification, here based on torque and/or position signals. For load estimates for a drive system in the general case, or in particular for a stacker crane, it is uncertain whether models for low load or high load should be used for failure monitoring and which method should be used to estimate them. The input to all load estimate methods are snippets of the time series signals for good and bad machine condition. These snippets are the training data subset determined by the respective operation condition rule with threshold $\tau k$ from the original dataset. Only snippets longer than a predefined minimum value depending on the load estimation method are further processed for load estimation. Therefore, after dividing datasets with threshold $\theta j$ in low mass $Djl$ and high mass $Djh$ it needs to be checked whether there are sufficient datapoints available before starting the training of the failure model.

As shown in Figure 7, steady state and start regions of the snippet are defined. Start point of the steady state region is exceeding a slope threshold. End point of the region is reaching ¾ length of the snippet. Then the position and amplitude of the first peak in the start region are calculated. Mean amplitudes of acceleration and torque in the steady state region are calculated. These values are used to calculate parameters gain, damping and resonance frequency of the second order step response model. The resonance frequency is taken as a value inversely proportional to the load assuming that the stacker crane stiffness does not change during operations. In case the value cannot be calculated the load estimate is omitted for this snippet.

Thus, in Figure 7 blue denoted the original signal or data samples, whereas the orange curve denotes the second derivative of the position signal, and the green curve shows a curve fitting with auto-regression based on first derivative for position. The violet curve denotes the start signal, i.e. signal or sample region, which is outside of a steady state region.

Additionally or alternatively, a load estimate may be determined and/or is based on the oscillating frequency in the steady state part of the torque snippet.

For constant controller settings the oscillation frequency depends on the stacker crane dynamics and the load. The mean value of the time difference between peaks is calculated as an estimate for the oscillation frequency that is inversely proportional to the load assuming that the stacker crane stiffness does not change during operations. Its value only slightly changes with the snippet length that is related to the length of travel related to the belt length. For shorter belt lengths the oscillation frequency increases, which could be explained by the increased belt stiffness.

Still further, additionally or alternatively, the load may be estimated by an autoregressive model. For each snippet the derivative of position is used to calculate speed. Then a low pass filter is applied to remove noise and jitter. The derivative of the filtered derivative of position is taken as an estimate for acceleration. After carrying out a linear regression between torque and acceleration, the slope of the linear regression model is an estimate for the complete mass of stacker crane and load. Assuming that the stacker crane mass remains constant during data acquisition changes in the estimated mass are solely expected from changes in the load.

Fig. 8 shows an exemplary embodiment of determining a robustness indicator for an anomaly detection model, here based on a mass dependent uncertainty. Models are trained on data sets for low and high masses estimated with these methods. The uncertainty of these models is mitigated by combining a weighted linear combination of methods in the case of low masses and high masses. Losses of models calculated for snippets with a mass estimate further from the load threshold are weighted with the inverse distance to the mass threshold such as to give a higher importance to mass estimates closer to the load threshold as shown in Figure 8. By calculating the combined loss of these methods iteratively for different load thresholds the optimum load threshold and estimation method for the given dataset is determined implicitly in a data-driven manner by choosing the model with the lowest single loss.

Fig. 9a shows an illustration depicting the identification of an operating state in the position signal, e.g., by modification of the threshold th and thus resulting in different data (sub)sections or (sub)segments used for finding a load threshold m. Fig. 9b shows exemplary steps for (re)training an anomaly detection model. Once the optimum load threshold is determined a further iteration of the operation condition determination is started to continue the training workflow detailed in Figure 9b.

Fig. 10 shows the identification of sections of operating states, wherein the sections represent different load states. Therein, a combination of data snippets which are labeled as bad and/or good at an operation condition at threshold th is shown. For each iteration a new threshold for the operation condition, e.g., speed, is applied to determine snippets with good and bad labels. As shown in Figure 10 snippets with mixed good and bad data need to be separated, snippets with a too small length need to be deleted and only when there is sufficient good and bad data the training process may start.

Before starting the load estimate again for each bad and good snippet the availability of peaks, steady state and slope is checked. After the load estimate has been carried out the good and bad data is separated in low $D_{jl} \subset D_k$ and high load $D_{jh} \subset D_k$ datapoints and it is checked again whether there is sufficient good and bad data to start the training procedure for low load and high load models.

During the jth load estimate iteration the load threshold $\theta_j$ is adapted to stay between the minimum $m_{kmin} = \min_s (m_{ks})$ and maximum $m_{kmax} = \max_s (m_{ks})$ load values of all $m_{ks}$ masses estimated at the kth iteration for S snippets for each method separately. It is checked that the number of training sets for low mass and high mass models is greater than 0 and that the number of classes the sets contain is 2 for binary classification. This check is carried out for each method at low and high mass and for incrementally increased and decreased load in case of the gradient calculation $\delta l_c/\delta\theta_j^-$ and $\delta l_c/\delta\theta_j^+$. For each method the respective load threshold may be:

- increased when the loss of the increased load model is smaller than the loss of the decreased load or reference load model or
- decreased when the loss of the decreased load model is smaller than the loss of the increased load or reference load model.

In case the reference load model has the smallest loss a random factor is added to the load for the next iteration.

In the same way during the operation condition threshold iteration the certain threshold is iterated between the minimum and maximum values known for this dataset e.g. slope. The model for the reference, incrementally increased or decreased threshold are trained on available classified bad and good data and the respective losses are calculated. The direction for the modification of the operation point threshold is determined by comparing the loss of the reference, incrementally increased and decreased threshold models. If the loss of the model with increased threshold is smaller than the loss of the model with reference and decreased threshold the threshold is increased in the next iteration. If the loss of the model with decreased threshold is smaller than the loss of the model with reference and increased threshold the threshold is decreased. In all other cases a random value is added to the operation condition threshold for the next iteration.

Now, the optimum model and pertinent rule may be selected. When the conditions for stopping the iterations are reached the pertinence of each fixed or uncertain rule is determined by calculating the standard deviation of the loss over iterations for each rule to get a measure of the fluctuation. If the standard deviation is below a threshold and

- a slope higher than a certain threshold can be calculated with a regression model the rule is considered to be pertinent since the loss converges to an optimum value. If
- the standard deviation is too high and
- the trend of the linear regression model of the loss of iterations is too small the rule is not pertinent.

Output to the user is the information on the optimum model with lowest loss and/or highest accuracy on the given dataset, the applied rules and information about which rules are not considered as pertinent.

In addition to the found optimum models certain operation condition and uncertain load estimate rules are continuously applied to the data and an indication about the current operation condition and load is given to the user in the UI and whether the model is running. If an operation condition or load is found that does not correspond to the rules or the model robustness is not sufficient an indication is output, e.g., to the user, that the respective failure cannot be detected and that model retraining and further input about the newly found operation condition is recommended. Additionally, the user can set the option that in addition to the automatic restart after initialization, detected inspection, repair and new component the optimization workflow starts automatically if a new operation condition is detected.

Inter alia a, preferably computer-implemented, method of monitoring a component of a drive system, preferably by an informed anomaly detection model, is proposed herein. The anomaly detection model may be a physics-informed anomaly detection model, e.g. as described herein. The anomaly detection model may be or may comprise a machine learning model, in particular an artificial neural network. The method may comprise the step of inputting one or more input values of variables representing an operation of at least one component and/or component data of the drive system into an anomaly detection model: the input values of the variables may preferably be obtained from a sensor signal of one or more sensors attached to the drive system. The component data may preferably relate to the drive system or the component of the drive system and may be obtained from the component or the drive system, e.g., from a (non-transitory) memory in the drive system or the component thereof. Component data may also be obtained from an external storage, e.g. in the cloud or on a computing device, e.g., from a (non-transitory) memory in the drive system or the component thereof.

It is proposed to vary one or more model parameters of the anomaly detection model, preferably one or more model parameter values representing one or more operating states and/or one or more load states of the drive system. To that end, changes in the model's output when one or more of the model's parameters are changed are considered. In that case the input, e.g., the input values, for example representing speed, torque and/or position, to the model may stay the same but one or more of the model's parameters as described herein are changed.

This variation of one or more of the model's parameters may also be used for the purposes described herein, such as model refinement, model retraining or the like.

Furthermore, determining a robustness indicator, indicating a robustness of the anomaly detection model for detecting and/or predicting an anomaly in the operation of the drive system when the model parameters are varied.

It is thus possible to, preferably iteratively, vary one or more model parameters of the anomaly detection model, e.g., from their present values, preferably towards an optimum of a loss function of the anomaly detection model.

The model parameters may be varied by iteratively training of an anomaly detection model on labeled input values segmented in estimated varying load and/or operation conditions.

Thus, a plurality of status indicators of the drive system may be determined, wherein each status indicator is determined based on a result of an anomaly detection model from a plurality of anomaly detection models, wherein each anomaly detection model serves for monitoring a respective component of the drive system and/or determining a specific fault of (a component of) the drive system. In a further step a performance indicator of the drive system may be determined based on the plurality of status indicators, preferably by combining the status indicators with the robustness indicator.

Still further a component type, component serial number, one or more, preferably rule-based, thresholds and/or one or more control programs, one or more operating states and/or one or more load states of the drive system may be determined, e.g., based on a component description. In a further step the model parameters of the one or more anomaly detection models may be determined and/or parameterized based on the one or more operating states and/or the one or more load states.

The anomaly detection model may be selected from a plurality of anomaly detection models based on the determined operating state and/or the load state, wherein the anomaly detection models are trained to determine and/or predict a specific fault of (a component of) the drive system, such as guide misalignment, belt tension, and/or controller noise, preferably based on the model parameters, such as operating state and/or the load state. In case an anomaly detection model is not available, e.g., for the one or more operating states and/or load states determined, the anomaly detection model may be (re-)trained based on the input values.

Thus, one or more operating states of the drive system may be determined for each one of the variables of the input values, e.g., for position and/or torque values of the drive system, for example by a time series analysis, such as autoregression, gliding curve fitting, thresholding, derivation, model identification, filtering, and/or maximizing, of the input values.

One or more load states of the drive system in each one of the one or more operating states and for each one of the variables of the input values may be determined, e.g., for position and/or torque values of the drive system, for example also by a time series analysis, such as autoregression.

The one or more input values, for example position values, speed values, and/or torque values, may be obtained from an electric converter of the drive system. A load state may be determined, for example during operation of the drive system, preferably based on electrical values during an acceleration and/or deceleration phase, or a load cycle, of the drive system. Thus, one or more model parameters, preferably one or more parameter values representing one or more operating states and/or load states, of the anomaly detection model may be varied.

Hence, it is possible to successively determine and/or optimize the one or more operating states and the one or more load states of the (component of the) drive system. For example at first the one or more operating states may be determined and/or optimized and subsequently the one or more load states related to the one or more operating states, e.g., acceleration/deceleration states with a high and/or low load state, in particular an empty run, or vice versa, may be determined and/or optimized.

Thus, the input data may be categorized into a plurality of load states, e.g., high load, low load, and/or empty run, preferably based on one or more threshold values representing an operation of the drive system in a load state. Preferably the threshold values are determined based on an optimization of a loss function of the one or more threshold values. Then, a (re-)training of the anomaly detection model based on the input data in the load states may be performed, for example considering a further categorization of the input data into operating states.

The input data may be categorized into a plurality of operating states, e.g., acceleration, deceleration and/or constant travel, preferably based on one or more threshold values representing an operation of at least one component of the drive system, preferably wherein the threshold values are determined based on an optimization of a loss function of the one or more threshold values. Then a retraining of the anomaly detection model based on the input data in the operating states and/or load states may be performed.

The anomaly detection model may determine a result that indicates a failure status and/or a health status of the drive system. A confirmation indicator, e.g., from an operator, may indicate whether the result of the anomaly detection model actually corresponds to the operation of the drive system. Thu, in case the confirmation indicator is obtained, (re-)training the anomaly detection model based on the input values maybe performed. After the (re-)training the anomaly detection model, the steps of obtaining the confirmation indicator, the model robustness indicator and/or one or more input values and inputting the input values in the (re-)trained anomaly detection model may be repeated.

Furthermore, the time series training data of the anomaly detection model may be varied, preferably using one training data set for multiple operations.

Furthermore, a load state of the drive system, preferably for each operating state, may be determined based on a comparison, e.g., a time series analysis, such as an autoregression, between the input values of at least two variables representing an operation of at least one component of the drive system. Thus, a load state of the drive system may be determined based on a comparison of input values during different operating states, e.g. during acceleration and deceleration phases.

Furthermore, a method of determining a training data set for training an anomaly detection model of a drive system is proposed. The method comprising splitting operating data into sections comprising input values representing one of a plurality of operating states, e.g. input values of an operating state. The method furthermore comprising splitting the input values (of different load states) in the one or more sections into segments representing load states. The method furthermore comprising splitting the input values at different load states in the one or more sections associated to good and bad conditions. The method also comprising combining the input values of different sections into a training data set, e.g. of the labeled data.

Still further, an apparatus, preferably a computing device comprising a processor and a memory, operative to perform the method steps of any one of the preceding embodiments is proposed. Furthermore, a computer program comprising program code that when executed, e.g., on the apparatus perform the method steps of any one of the preceding embodiments is proposed. Furthermore, a stacker crane comprising an apparatus and/or a drive system according to any one of the preceding embodiments is proposed.

**Claims**

1. A, preferably computer-implemented, method of monitoring a component (1, 2, 3, 5) of a drive system (4), preferably by an informed anomaly detection model, comprising the steps of:

   inputting one or more input values of variables representing an operation of at least one component and/or component data (D1) of the drive system (4) into one or more anomaly detection models (A1, A2, A3), preferably obtained from a sensor signal of one or more sensors attached to the drive system and/or component data,
   varying one or more model parameters of the one or more anomaly detection models (A1, A2, A3), preferably one or more model parameter values representing one or more operating states and/or one or more load states of the drive system (4),
   determining a robustness indicator (RO), indicating a robustness of the anomaly detection model for detecting and/or predicting an anomaly in the operation of the drive system (4) when the model parameters are varied.

2. The method according to the preceding claim, preferably iteratively, varying one or more model parameters of the anomaly detection model, e.g., from their present values, preferably towards an optimum of a loss function of the anomaly detection model.

3. The method according to the preceding claim,

   determining a plurality of status indicators of the drive system (4), wherein each status indicator is determined based on a result of an anomaly detection model from a plurality of anomaly detection models, wherein each anomaly detection model (A1, A2, A3) serves for monitoring a respective component of the drive system (4) and/or determining a specific fault of (a component of) the drive system (4), and
   determining a performance indicator of the drive system (4) based on the plurality of status indicators, preferably by combining the status indicators with the robustness indicator.

4. The method according to any one of the preceding claims,

   determining, e.g., based on a component description (D1), component type, component serial number, one or more, preferably rule-based, thresholds and/or one or more control programs, one or more operating states and/or one or more load states of the drive system (4), and
   determining and/or parameterizing the model parameters of the one or more anomaly detection models based on the one or more operating states and/or the one or more load states.

5. The method according to any one of the preceding claims,

   selecting the anomaly detection model (A1, A2, A3) from a plurality of anomaly detection models (A1, A2, A3) based on the determined operating state and/or the load state, wherein the anomaly detection models (A1, A2, A3) are trained to determine and/or predict a specific fault of (a component of) the drive system, such as guide misalignment, belt tension, and/or controller noise, preferably based on the model parameters, such as operating state and/or the load state,

and/or

in case an anomaly detection model (A1, A2, A3) is not available or not robust enough, e.g., for the one or more operating states and/or load states determined, (re-)training the anomaly detection model (A1, A2, A3) ased on the input values.

6. The method according to any one of the preceding claims,

determining one or more operating states of the drive system (4) for each one of the variables of the input values, e.g., for position and/or torque values of the drive system, for example by a time series analysis, such as autoregression, of the input values, and/or

determining one or more load states of the drive system (4) in each one of the one or more operating states and for each one of the variables of the input values, e.g., for position and/or torque values of the drive system, for example also by a time series analysis, such as autoregression, of the input values.

7. The method according to any one of the preceding claims,

obtaining the one or more input values, for example position values, speed values, and/or torque values, from an electric converter of the drive system (4), and/or determining a load state, for example during operation of the drive system, preferably based on electrical values during an acceleration and/or deceleration phase, or a load cycle, of the drive system (4), varying one or more model parameters, preferably one or more parameter values representing one or more operating states and/or load states, of the anomaly detection model (A1, A2, A3).

8. The method according to any one of the preceding claims, successively determining and/or optimizing the one or more operating states and the one or more load states of the (component of the) drive system (4), for example at first determining and/or optimizing the one or more operating states and subsequently determining and/or optimizing the one or more load states related to the one or more operating states, e.g., acceleration/deceleration states with a high and/or low load state, in particular an empty run, or vice versa.

9. The method according to any one of the preceding claims,

categorizing the input data into a plurality of load states, e.g., high load, low load, and/or empty run, preferably based on one or more threshold values representing an operation of the drive system (4) in a load state, preferably wherein the threshold values are determined based on an optimization of a loss function of the one or more threshold values, and

(re-)training the anomaly detection model based on the input data in the load states.

10. The method according to any one of the preceding claims,

categorizing the input data into a plurality of operating states, e.g., acceleration, deceleration and/or constant travel, preferably based on one or more threshold values representing an operation of at least one component of the drive system, preferably wherein the threshold values are determined based on an optimization of a loss function of the one or more threshold values, and

retraining the anomaly detection model based on the input data in the operating states.

11. The method according to any one of the preceding claims,

determining by the anomaly detection model a result that indicates a failure status and/or a health status of the drive system (4), and obtaining a confirmation indicator, e.g., from an operator, indicating whether the result of the anomaly detection model actually corresponds to the operation of the drive system, and/or in case the confirmation indicator is obtained, (re-)training the anomaly detection model (A1, A2, A3) based on the input values, and/or after (re-)training the anomaly detection model, repeating the steps of obtaining the one or more input values and inputting the input values in the (re-)trained anomaly detection model.

12. The method according to any one of the preceding claims,

determining a load state of the drive system (4), preferably for each operating state, based on a comparison, e.g., a time series analysis, such as an autoregression, between the input values of at least two variables representing an operation of at least one component of the drive system (4), and/or

determining a load state of the drive system based on a comparison of input values during different operating states, e.g. during acceleration and deceleration phases.

13. A method of determining a training data set for training an anomaly detection model of a drive system, comprising the steps of

splitting operating data into sections comprising input values representing one of a plurality of operating states, e.g. with good and/or bad label,

splitting the input values in the one or more sections into segments representing load states, e.g., with good or bad labels,

combining the input values of different sections into a training data set, e.g., with good or bad labels.

14. An apparatus (3), preferably a computing device comprising a processor and a memory, operative to perform the method steps of any one of the preceding claims.

15. A stacker crane comprising an apparatus (2) and/or a drive system (4) according to any one of the preceding claims.

# Fig. 1

EP 4 718 193 A1

# Fig.2

**S1** — use information from machine description, MLFB, PLC... to define available operation conditions + load and obtain models from comparable setups

**S2** — operation condition detection, e.g., position, speed torque...

**S3** — identify load by model identification during acceleration and deceleration conditions in comparison to no load fingerprints

**S4**
- **A1** — load dependent fault detection model at constant speed
- **A2** — load dependent fault detection model at model deceleration
- **A3** — load dependent fault detection model at model acceleration

model available — yes / no

**S5** — mutli-dimensional indicator:

guiderail misalignment
belt tension
controller noise

**S7** — Train optimum model

**S6** — Operator feedback:
- Failure existing
- Failure not existing
- Rack feeder stopped due to maintenance
- New maintenance carried out

# Fig.3

D1

EP 4 718 193 A1

| Operation condition | signal | formula | Parameter 1 value | Parameter 2 value |
|---|---|---|---|---|
| Constant speed | slope | slope_limit_low < slope < slope_limit_high | -0.02 v r / f with minimum speed v=1m/s, displacement range l=10m, sampling frequency f=500Hz; | 0.02 |
| startup | position | position < position_limit_high | 1000000 | - |
| acceleration | torque | torque > torque_limit | 30 | - |
| deceleration | torque | torque < torque_limit | -30 | - |

# Fig.4a

Optimize load threshold

Estimate load

Estimate mass gradient

Calculate loss gradient dl/dm

Update m

Continue 10 iterations

Calculate loss gradient dl/dth

Update th

Continue 50 iterations

Determine operation condition

# Fig.4b

Determine operation
condition

Optimize load
threshold

Update m

Continue
10
iterations

Calculate
loss
gradient for
m +/-dm

Estimate
load

Estimate
mass
gradient

Update th

Calculate loss
gradient for th+/- dt

EP 4 718 193 A1

# Fig.5a

Via slope

Normalized slope to dynamic range

slope > 1
acc

|slope|<1
const

slope < -1
dec

Max-window
= speed

windowsize

# Fig.5b

Via torque

# Fig.5c

Via position change

# Fig.6.1a

while data is available:

Take nth data window of length l

while i < l

Take first i points from window

Fit linear regression model to i data points

If abs(estimated slope) < slope threshold include datapoint i in const slope dataset

If estimated slope < slope threshold <0 include datapoint i in negative slope dataset

If estimated slope > slope threshold > 0 include datapoint i in positive slope dataset

# Fig.6.1b

Start point of nth window for constant slope dataset ▬▬▬▬

Start point of nth window for positive slope dataset ▬▬▬▬

Start point of nth window for negative slope dataset ▬▬▬▬

EP 4 718 193 A1

# Fig.6.2

EP 4 718 193 A1

Fig.6.3

Fig.7

# Fig.8

EP 4 718 193 A1

mass

Model
threshold

m2
m
m1

Torque,
d2pos/dt

# Fig.9a

Fig.9b

Fig.10

Europäisches
Patentamt

European
Patent Office

Office européen
des brevets

# EUROPEAN SEARCH REPORT

**Application Number**

EP 24 20 2731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/019209 A1 (KLOEPPER BENJAMIN [DE] ET AL) 20 January 2022 (2022-01-20) * paragraphs [0002] - [0007], [0013] - [0077]; figures 1-3 * ----- | 1-12,14, 15 | INV. G05B23/02 G06N3/08 G06N20/00 G07C5/08 |
| X | EP 4 174 601 A1 (SIEMENS AG [DE]) 3 May 2023 (2023-05-03) * paragraphs [0001] - [0021], [0025] - [0074] * ----- | 1-12,14, 15 | |

**TECHNICAL FIELDS SEARCHED (IPC)**

G05B
G07C
G06N

The present search report has been drawn up for all claims

| Place of search | Date of completion of the search | Examiner |
|---|---|---|
| The Hague | 4 March 2025 | Barriuso Poy, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12, 14, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

**Application Number**

**EP 24 20 2731**

The Search Division considers that the present European patent application does not comply with the requirements of unity of invention and relates to several inventions or groups of inventions, namely:

```
1. claims: 1-12, 14, 15

        A method of monitoring
                ---


2. claim: 13

        A method of determining a training data set
                ---
```

## ANNEX TO THE EUROPEAN SEARCH REPORT
## ON EUROPEAN PATENT APPLICATION NO.

EP 24 20 2731

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | Publication date | Patent family member(s) | | Publication date |
|---|---|---|---|---|
| US 2022019209 A1 | 20-01-2022 | CN | 113632027 A | 09-11-2021 |
| | | EP | 3948459 A1 | 09-02-2022 |
| | | US | 2022019209 A1 | 20-01-2022 |
| | | WO | 2020200412 A1 | 08-10-2020 |
| EP 4174601 A1 | 03-05-2023 | CN | 118176467 A | 11-06-2024 |
| | | EP | 4174601 A1 | 03-05-2023 |
| | | EP | 4423582 A1 | 04-09-2024 |
| | | WO | 2023072724 A1 | 04-05-2023 |

For more details about this annex : see Official Journal of the European Patent Office, No. 12/82

**REFERENCES CITED IN THE DESCRIPTION**

**Patent documents cited in the description**

- EP 4162600 A
- EP 24193237 A
- EP 24171297 A
- EP 22192834 A
- EP 23173091 A
- EP 21210218 A